Europäisches Patentamt

European Patent Office

Office européen des brevets

(11) Publication number: **0 411 855 A2**

# EUROPEAN PATENT APPLICATION

(21) Application number: **90308329.3**

(51) Int. Cl.⁵: **G05F 1/577**

(22) Date of filing: **30.07.90**

(30) Priority: **01.08.89 GB 8917525**

(43) Date of publication of application:
**06.02.91 Bulletin 91/06**

(84) Designated Contracting States:
**DE FR GB IT NL SE**

(71) Applicant: **LUCAS INDUSTRIES PUBLIC LIMITED COMPANY**
**Great King Street**
**Birmingham, B19 2XF(GB)**

(72) Inventor: **Hellam, Derek**
**222 St. Vincent Street, Westoe**
**South Shields NE33 3BH(GB)**

(74) Representative: **Gibson, Stewart Harry et al**
**URQUHART-DYKES & LORD Business**
**Technology Centre Senghennydd Roadoad**
**Cardiff CF2 4AY South Wales(GB)**

(54) **Power control circuit.**

(57) An electrical appliance such as a vacuum cleaner has a power outlet socket (18) to which an accessory such as a drill or sander is connectable, and a power control circuit which senses flow of current through the power outlet to the accessory (22) so as to actuate a switching means (TR) for supplying current to a load (M2) of the main appliance. A delay means (C1, R3) causes the switching means (TR) to continue supplying current to the load (M2) of the main appliance for a predetermined period after the flow of current to the accessory (22) ceases. Thus the accessory may be switched on using its own manual switch (28), in response to which the control circuit energises the main appliance itself and maintains this appliance energised for a period after the accessory is switched off.

FIGURE 2

## POWER CONTROL CIRCUIT

This invention relates to a power control circuit and more particularly to a circuit, in or for a domestic vacuum cleaner or other electrical appliance, for controlling the supply of power to an accessory of that appliance.

It is known to provide a domestic vacuum cleaner with an electrical power socket into which the electrical supply cable of an accessory can be plugged. For example the accessory may be a power tool (e.g. a drill or a sander) to which the vacuum hose of the vacuum cleaner may be coupled or extended nearby, in order to remove by suction dust generated by the power tool.

We have now devised an improved power control circuit for controlling the supply of electrical power to a power tool or accessory via a power outlet on a vacuum cleaner or other appliance.

In accordance with this invention, there is provided a power control circuit in or for an electrical appliance which has a power outlet to which an accessory is connectable, the circuit comprising means for sensing a flow of electrical current through the power outlet to the accessory so as to actuate a switching means for supplying electrical current to a load of the appliance, the circuit further including a delay means causing the switching means to continue supplying current to said load of the appliance for a predetermined period after the flow of current to the accessory ceases.

Thus for example, the accessory may be switched on using its own manual control switch, in response to which the power control circuit of the main appliance causes current to be supplied to energise the appliance itself. However, when the accessory is switched off, the main appliance remains energised for the predetermined period of time defined by the delay means.

Typically the main appliance may comprise a vacuum cleaner and the accessory may comprise a power tool such as a drill or sander, the vacuum hose of the vacuum cleaner being coupled to or extended close to the power tool to remove by suction the dust which it generates. The power control circuit of the vacuum cleaner thus ensures that the suction to the power tool is maintained for the predetermined period after the power tool is switched off. This ensures that the remaining dust will be removed from or from adjacent the power tool by the vacuum cleaner.

Preferably the power control circuit includes a power resistor through which the current for the accessory passes, so that a voltage is developed across this power resistor when the accessory is switched on. Preferably this voltage is rectified for application to the time delay means, which preferably comprises a capacitor which is charged substantially instantaneously when the current starts to flow to the accessory, but which discharges progressively through a resistor when that current ceases to flow. Preferably the capacitor is connected to a comparator which switches from one state to another when the charge on the capacitor reaches a threshold level. Preferably this comparator exhibits hysteresis such that it switches back to its one state only once the charge on the capacitor has returned to a lower threshold level.

Preferably the switching means to the load or drive unit of the vacuum cleaner or main appliance comprises a bidirectional semiconductor power switching device e.g. a triac. Preferably an oscillator is provided which drives the gate of the triac whilst the accessory is switched on and thereafter until the time delay period expires. Instead however the switching means may comprise a relay.

An embodiment of this invention will now be described by way of example and with reference to the accompanying drawings, in which:

FIGURE 1 is a diagrammatic illustration of a vacuum cleaner having a power tool connected into a power outlet of the vacuum cleaner and having its vacuum hose coupled to the power tool; and

FIGURE 2 is a diagram of a power control circuit in or for the vacuum cleaner of Figure 1.

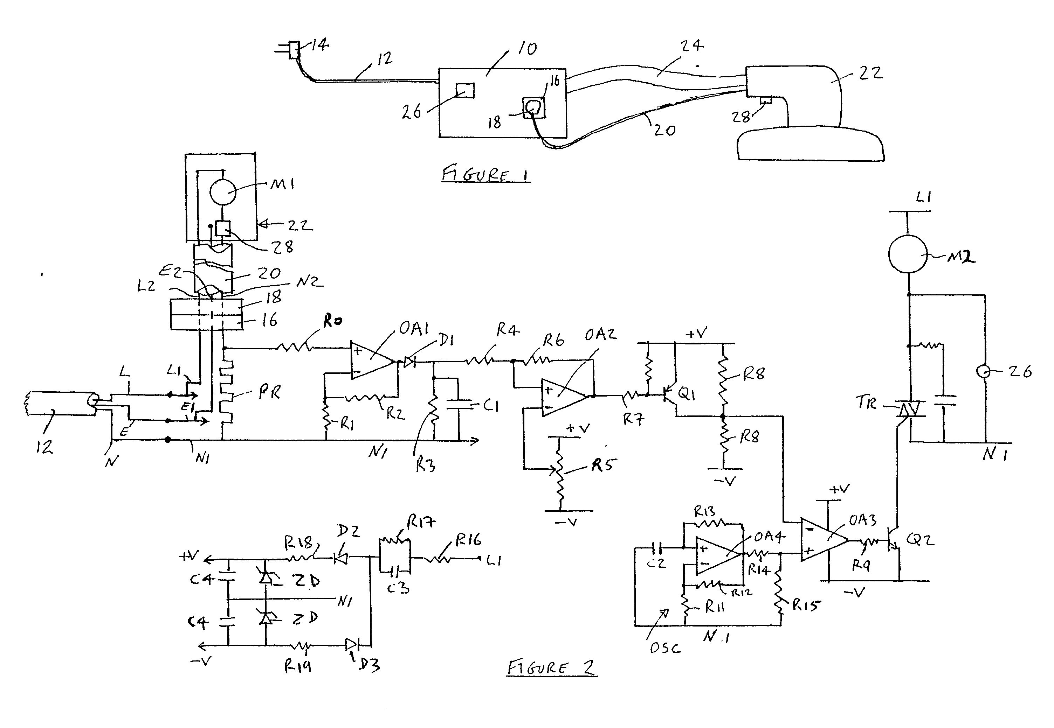

Referring to Figure 1 of the drawings, there is shown a vacuum cleaner 10 having a cable 12 for connection to a mains outlet via a plug 14, and furthermore having a power outlet or socket 16 into which is connected the plug 18 on a cable 20 to a power tool 22 (e.g. a sander). The vacuum cleaner has its vacuum hose 24 coupled to the power tool for removing by suction the dust generated by the power tool when in use: alternatively the hose may simply be extended to a point near the power tool or coupled to a tray below it. The vacuum cleaner has a manual switch 26 for energising the appliance from the mains for its normal use.

The vacuum cleaner further includes a power control circuit which will energise the appliance whilst current is drawn by the power tool 22, by closing a manual switch 28 of the latter, and will maintain energisation of the vacuum cleaner for a predetermined period after the power tool is switched off.

Referring to Figure 2, there is shown the power control circuit which is included in the vacuum cleaner of Figure 1. The mains cable 12 to the vacuum cleaner is indicated, also the accessory socket 16, the plug 18 and cable 20 of the accessory and the drive motor M1 of the latter. The mains cable 12 includes live, neutral and earth conductors L, N, E which connect with corresponding rails L1, N1, E1 within the vacuum cleaner. The cable 20 of the accessory includes live, neutral and earth conductors L2, N2, E2, of which conductors L2 and E2 connect directly with the rails L1, E1 of the vacuum cleaner via plug 18 and socket 16, whilst conductor N2 connects with rail N1 via a power resistor PR. The drive motor M2 of the vacuum cleaner has one side connected to the live rail L1 of the appliance and its other side connectable to the neutral rail N1 of the appliance alternatively via the on/off switch 26 or via a triac TR.

The power control circuit comprises the following stages. An operational amplifier OA1 has its inverting input connected to the rail N1 via a resistor R1 and its non-inverting input connected to the other end of the power resistor PR via a series resistor RO. A feedback resistor R2 connects the output of operational amplifier OA1 to its inverting input. A rectifying diode D1 connects the output of the operational amplifier OA1 to a time delay circuit consisting of a resistor R3 and a capacitor C1 connected in parallel from the signal path to the rail N1. The resistor R3 may be adjustable so that the user can select the desired delay period. The output of the time delay circuit is connected by a series resistor R4 to the non-inverting input of an operational amplifier OA2 serving as a comparator stage. The inverting input of this operational amplifier OA2 is connected to an adjustable tapping point on a resistor chain R5 connected between +V and -V supply rails (typically + 15 volts and -15 volts). The adjustable tapping point permits adjustment of the level at which the comparator switches and hence the sensitivity of the circuit to suit accessories with different loads. The output of operational amplifier OA2 is connected by a feedback resistor R6 to its non-inverting input. The output of operational amplifier OA2 is connected via a resistor R7 to the base of a pnp transistor Q1, which has its emitter connected to the +V rail and its collector connected to the junction between two equal resistors R8 which are connected in series between he +V and -V rails. This junction is connected to the inverting input of an operational amplifier OA3, the output of which is connected via a resistor R9 to the base of an npn transistor Q2 having its emitter connected to the -V rail and its collector connected via a resistor R10 to the gate of the triac TR. A square wave oscillator OSC is connected to the non-inverting input of operational amplifier OA3 via a series resistor R14. This oscillator comprises an operational amplifier OA4 with its inverting and non-inverting inputs connected to rail N1 respectively via a resistor R11 and a capacitor C2 and its output connected to its respective inputs via feedback resistors R12, R13. A resistor R15 connects the non-inverting input of operational amplifier OA3 to rail N1.

Figure 2 also shows the power supply circuit for the power controller. This power supply circuit is fed from the live rail L1 through a series resistor R16 followed by a parallel combination of resistor R17 and capacitor C3 to two parallel branches which include oppositely-poled diodes D2, D3 and series resistors R18, R19. A capacitor C4 and a zener diode ZD connect each of these branches to rail N1 and the +V and -V supplies (+ and - 15 volts) are delivered across these.

In operation, when the switch 28 of the accessory 22 is closed, current passes through its motor M1 and through the power resistor PR of the power control circuit. The voltage which is developed across this power resistor is amplified by operational amplifier OA1 and then half-wave rectified by diode D1. The capacitor C1 almost instantaneously reaches a level of charge sufficient to switch the comparator stage OA2, consequently turning off transistor switch Q1 and holding the inverting input of operational amplifier OA3 low (i.e. at approximately zero). The operational amplifier OA3 is driven by the square wave output from the oscillator OSC, which cycles around zero at about 10-20 kHz, to drive transistor switch Q2 alternately on and off at the frequency of the oscillator. The triac TR is thus switched on to supply power to the motor M3 of the vacuum cleaner.

When the switch 28 of the power tool 22 is switched off, the current through the power resistor PR ceases. The capacitor C1 now discharges through the resistor R3. After a time delay, being the time taken for the capacitor C1 to discharge sufficiently, the comparator stage OA2 switches back to turn on the transistor switch Q1: the comparator stage OA2 exhibits hysteresis such that the capacitor C1 must discharge to a lower level (before the comparator will switch back) than the level to which the capacitor C1 was required to charge (to switch the comparator initially). With transistor Q1 switched on again, the inverting input to operational amplifier OA3 is held high and its output is therefore at approximately zero to switch off transistor Q2. Accordingly, the triac TR stops conducting and the motor M2 of the vacuum cleaner stops, but only at the end of the predetermined time delay from switching off the power tool 22.

## Claims

1) In or for an electrical appliance which has a power outlet to which an accessory is connectable, a power control circuit comprising means (PR, OA1, OA2) for sensing a flow of electrical current through the power outlet (16) to the accessory (22) so as to actuate a switching means (TR) for supplying electrical current to a load (M2) of the appliance, the circuit further including a delay means (C1, R3) causing the switching means to continue supplying current to said load of the appliance for a predetermined period after the flow of current to the accessory ceases.

2) A power control circuit as claimed in claim 1, characterised in that the current flow sensing means comprises a resistor (PR) through which the current for the accessory passes, and a rectifier (D1) rectifying the voltage developed across said resistor (PR).

3) A power control circuit as claimed in claim 2, characterised in that the delay means comprises a capacitor (C1) to which the rectified voltage is applied, and a discharge path (R3) for the capacitor.

4) A power control circuit as claimed in claim 3, characterised in that the capacitor is connected to a comparator (OA2) which switches from one state to another when the charge on the capacitor (C1) reaches a threshold level.

5) A power control circuit as claimed in any preceding claim, characterised in that the switching means (TR) comprises a bidirectional semiconductor power switching device driven by an oscillator (OSC).

FIGURE 1

FIGURE 2